# EUROPÄISCHE PATENTSCHRIFT

(11) **EP 3 417 717 B1**
(45) Veröffentlichungstag und Bekanntmachung des Hinweises auf die Patenterteilung: **22.07.2020**
(21) Anmeldenummer: 18179213.6
(22) Anmeldetag: 22.06.2018
(51) Int. Cl.: A23G 9/32, A23G 9/34, A23G 9/38, A23G 9/42, A23G 9/48, A23K 50/48

(54) **VERFAHREN ZUR HERSTELLUNG VON ZUCKERFREIEM SPEISEEIS**
METHOD FOR THE PRODUCTION OF SUGAR-FREE ICE CREAM
PROCÉDÉ DE FABRICATION DE GLACE ALIMENTAIRE SANS SUCRE

(30) Priorität: 22.06.2017 DE 102017210525
(43) Veröffentlichungstag der Anmeldung: 26.12.2018
(73) Patentinhaber: Deutsches Institut für Lebensmitteltechnik e.V., 49610 Quakenbrück (DE)
(72) Erfinder: Dr. Bindrich, Ute, 49610 Quakenbrück (DE); Dr. Frieling, Josef, 49610 Quakenbrück (DE)
(74) Vertreter: Taruttis, Stefan Georg

(56) Entgegenhaltungen:
- EP-A1- 0 152 351
- EP-A1- 2 145 546
- EP-A1- 2 745 711
- WO-A1-2007/136188
- AT-B- 385 180
- DE-U1-202012 101 269
- KR-A- 20160 133 641
- US-A- 4 218 482
- US-A1- 2009 246 346
- US-B1- 6 773 743

## Beschreibung

Die Erfindung betrifft ein Verfahren zu Herstellung von Speiseeis, das weniger als 1 Gew.-%, bevorzugt weniger als 0,5 Gew.-% Zucker enthält oder frei von Zucker ist, der insbesondere Glucose, Saccharose, Fructose, Lactose und Maltose umfasst. Weiter betrifft die Erfindung mit dem Verfahren hergestelltes Speiseeis.

Das Verfahren hat den Vorteil, dass das damit hergestellte Speiseeis einen geringen Zuckergehalt aufweist bzw. frei von Zucker ist und weiter bevorzugt einen geringen Anteil von Zuckeraustauschstoffen wie Zuckeralkohlen, z.B. maximal 1 Gew.-%, enthält, und noch bevorzugter frei von Zuckeraustauschstoffen, z.B. frei von Zuckeralkohlen ist.

### Stand der Technik

Es ist bekannt, Speiseeis aus einem flüssigen Eismix herzustellen, der Zucker, insbesondere Saccharose, optional Alkohol, zur Gefrierpunktserniedrigung enthält und diesen Eismix in einem Freezer, der in einem Kühlmantel einen bewegten Schaber hat, durch Eintragen von Luft mit Aufschlag zu versehen und zu frieren, um eine Eismasse herzustellen, die anschließend durch weiteres Kühlen gehärtet wird.

Die KR 10-2016-0133641 A beschreibt ausweislich der englischen Computerübersetzung, die beim KIPO erhältlich ist, nur das Mischen von 55 bis 75 Gewichtsteilen ungesalzener Butter bei 40 bis 50 °C mit laktosefreier Milch (100 Gewichtsteile) mit Eigelb zur Herstellung einer ersten Mischung und Einmischen von Joghurt mit Lactobazillen und anschließendes Einmischen von Früchten.

Die WO 2007/136188 A1 beschreibt das Mischen von 400 g fettfreier Trockenmilch in 11 Wasser in einem Mischer, die Zugabe von 200 ml zuckerfreiem Sirup mit Zugabe von 10 g nanomodifizierter Stärke mit anschließendes Einmischen zerkleinerter Früchte und Einfrieren.

Die EP 2145546 A1 beschreibt eine "Trockenmischung zur Herstellung von Speiseeis" "mittels derer im Haushalt mit einfachen Küchengeräten wie Handmixer und Pürierstab, d.h. ohne Verwendung einer Eismaschine und ohne Verwendung eines separat hergestellten Lebensmittelschaums ein cremiges Eis, vorzugsweise Fruchteis, mit wenig Aufwand herstellbar ist".

Die EP 0152351 A1 beschreibt zuckerfreie Eismassen, die Zuckeralkohol als Gefrierpunktserniedriger enthalten.

Die US 2009/0246346 A1 beschreibt belüftete Eismassen mit mehr als 80% Tofumus und einem Süßungssystem zur Gefrierpunktserniedrigung mit Sacchariden und Zuckeralkoholen und mit einem Stabilisatorsystem mit Hydrokolloiden.

Die DE 20 2012 101 269 U1 beschreibt Speiseeismassen mit Erythritol.

Die AT 385180 B beschreibt ein Verfahren zur Herstellung von Speiseeis durch Eintragen einer Grundmischung in Wasser und anschließendes Rühren, Kühlen, Einrühren von Luft und ggf. von Aromastoffen und Kühlen bis zum Gefrieren der Mischung. Das Speiseeis enthält 4% Sprühalbumin, das 22% Laktose, 4,6% Fructose und 0,6% Saccharose enthält, 3% Magermilchpulver, das 51% Laktose enthält, sowie 5% Fructose.

Die US 6,773,743 B1 beschreibt Eismassen, die 0,9 bis 1,1% Glycerin enthalten, sowie 2,8-3,2% nicht-Fett-trockene Milchbestandteile, sowie 83,454 bis 80,162% Sahne und Magermilch.

Die EP 2745711 A1 beschreibt eine Zusammensetzung für Eismasse, die 12% Saccharose, 10% Magermilchpulver und 5% Glucosesirup enthält.

Die US 4,218,482 A beschreibt eine Eismasse zur Verwendung als Tierfutter mit 12% Molkepulver, 12% laktosefreiem Molkepulver, 30% Magermilchpulver, 5% Casein und 3% Milchalbumin, vorzugsweise mit 21,5% Tierfett.

### Aufgabe der Erfindung

Der Erfindung stellt sich die Aufgabe, ein alternatives Verfahren zur Herstellung von Speiseeis anzugeben, bei dem der Eismix weniger als 1 Gew.-% Zucker enthält. Bevorzugt soll das Verfahren ohne den Zusatz von Inhaltsstoffen durchgeführt werden, die eine Gefrierpunktserniedrigung bewirken.

### Beschreibung der Erfindung

Die Erfindung löst die Aufgabe mit den Merkmalen der Ansprüche, insbesondere durch ein Verfahren zur Herstellung von Speiseeis mit den Schritten
- Herstellen einer Voremulsion, die zumindest ein wasserlösliches Protein, Wasser, zumindest ein Fett und zumindest einen Emulgator, optional einen Farbstoff, aufweist oder daraus besteht,
- Hochdruckemulgieren der Voremulsion durch Entspannen einer Druckdifferenz von zumindest 1500 bar, bevorzugt zumindest 1800 bar oder zumindest 2000 bar, bevorzugter bis 4000 bar, noch bevorzugter 2500 bis 3500 bar, z.B. 2500 bis 3000 bar, zur Herstellung einer Emulsion,
- Mischen der Emulsion mit zumindest einem feinteiligen Lebensmittel, das optional in einer Mischung enthalten sein kann, die das zumindest eine feinteilige Lebensmittel, das bevorzugt in Wasser eingemischt und/oder feinverteilt oder gelöst ist, Maltodextrin und optional einen Farbstoff enthält oder daraus besteht, zur Herstellung eines Eismixes, wobei optional das feinteilige Lebensmittel, optional in Mischung mit Wasser, vor dem Mischen mit der Emulsion pasteurisiert wird,
- optional Pasteurisieren des Eismixes,
- Kühlen des Eismixes unter Bewegung, insbesondere durch Schaben des Eismixes von einer Kühlfläche, bevorzugt mit Eintragen von Gas, zur Herstellung einer Eismasse,
- mit anschließendem weiteren Kühlen der Eismasse mittels eines gekühlten Planetenwalzenextruders, zur Herstellung einer gefrorenen Eismasse,
- Portionieren der gefrorenen Eismasse zur Herstellung von Stücken aus der gefrorenen Eismasse,
- optional mit Beschichten der Stücke der gefrorenen Eismasse, bevorzugt mit nur Wasser oder mit einer wässrigen Mischung als Beschichtungsmasse, die z.B. gleich der Voremulsion, einer Mischung zumindest eines feinteiligen Lebensmittels in Wasser, optional mit Maltodextrin, oder gleich dem Eismix sein kann, optional mit Zusatz eines Farbstoffs, mit anschließendem Kühlen.

Das Mischen der Bestandteile der Voremulsion kann z.B. durch Rühren oder durch Niederdruck-Homogenisieren erfolgen.

Die Voremulsion kann durch Mischen ihrer Inhaltsstoffe, z.B. mittels eines Rührers oder Mischers, z.B. mittels Pumpen durch einen statischen Mischer, mittels eines Rührwerks, eines Rotor-Stator-Mischers oder eines Turbinenmischers, z.B. bei 750 bis 1000 Upm und/oder mittels eines Niederdruck-Homogenisators hergestellt werden. Das Mischen hat bevorzugt eine Wirkung, die dem Mischen mittels eines Ultra-Turrax bei 2000 bis 3000 Upm entspricht.

Bevorzugt wird die Voremulsion durch
- Lösen des zumindest einen wasserlöslichen Proteins in Wasser zur Herstellung einer wässrigen Proteinlösung und
- Einmischen des Fetts und des Emulgators zu der wässrigen Proteinlösung und Mischen hergestellt,
wobei optional Farbstoff in das Wasser oder in die wässrige Proteinlösung gegeben wird.

Generell wird mit dem zumindest einen wasserlöslichen Protein mit Wasser eine Voremulsion hergestellt, in der das Protein gelöst und/oder kolloidal verteilt ist.

Das wasserlösliche Protein kann ein Pflanzenproteinisolat sein, z.B. isoliertes Leguminosenprotein, z.B. Erbsenprotein, oder isoliertes hydrolysiertes Getreideprotein, insbesondere isoliertes Weizenprotein, Gelatine, Eiklar, bevorzugt Milchprotein, z.B. Magermilch, insbesondere Magermilchpulver, bevorzugt lactosereduziert oder lactosefrei, oder eine Mischung von zumindest zweien dieser. Das wasserlösliche Protein kann als Pulver vorliegen oder wasserhaltig.

Das Fett ist zumindest in Mischung mit dem Emulgator in Wasser emulgierbar, das eine Temperatur von 25°C bis 90°C, z.B. 30°C bis 75°C, aufweisen kann. Das Fett ist bevorzugt ein Fett oder Öl, das bei 5°C bis 90°C flüssig ist, bzw. bei seiner Schmelztemperatur bis 90°C, z.B. ausgewählt unter tierischen und pflanzlichen Fetten, z.B. Fischöl, insbesondere Lachsöl, Butter, Butterfett, Kokosfett, Kakaobutter, Palmöl und Mischungen von zumindest zweien dieser.

Der Emulgator umfasst bevorzugt Mono- und Diglyceride von Speisefettsäuren, Eigelb, das optional enzymatisch hydrolysiert ist, z.B. mittels Phospholipase A2 oder D, oder eine Mischung von zumindest zweien dieser, oder besteht daraus.

Das feinteilige Lebensmittel, das vor dem Einmischen in Wasser ein rieselfähiges Pulver, ein pastöses oder flüssiges Präparat sein kann, weist in Mischung mit Wasser bevorzugt Partikelgrößen von maximal 500 µm, bevorzugter maximal 250 µm auf oder bildet ein Kolloid oder eine Lösung. Das feinteilige Lebensmittel kann z.B. Fischpulver, Fleischpulver, Streichwurst, Fleischextrakt, pflanzliches Pulver, z.B. Fruchtpulver, oder Fruchtpülpe, Käsepulver, Schmelzkäse oder eine Mischung von zumindest zweien dieser sein. Optional weist die Mischung des feinteiligen Lebensmittels mit Wasser, optional mit Maltodextrin, eine Temperatur von 5°C bis 90°C, z.B. 15°C bis 75°C auf.

Das Maltodextrin hat z.B. eine Kettenlänge von 7 bis 12 Glucoseeinheiten.

Das Verfahren hat den Vorteil, einen Eismix herzustellen, aus dem mittels eines Freezers eine Eismasse hergestellt werden kann, die eingebrachtes Gas, z.B. Luft oder Stickstoff, als Aufschlag enthalten kann und die eine für Speiseeis geeignete Kristallgröße aufweist und aus der mittels eines gekühlten Planetenwalzenextruders gefrorene Eismasse hergestellt werden kann. Der Freezer kann ein herkömmlicher Freezer sein, bei dem Schaber den Eismix entlang einer gekühlten Oberfläche bewegen und an der gekühlten Oberfläche angefrorenen Eismix entfernen.

Der Eismix enthält daher keine gefrierpunktserniedrigenden Inhaltsstoffe, insbesondere Zucker zu maximal 1 Gew.-%, bevorzugt maximal 0,5 Gew.-% oder keinen Zucker, keinen Alkohol und kein Glycerin.

Das Speiseeis ist definiert in den Ansprüchen. Optional kann der Eismix Süßungsmittel enthalten, z.B. Peptid-Süßstoffe oder Steviaglycoside, und/oder Zuckeralkohole, z.B. Isomalt, Xylit und/oder Erythrit. Bevorzugt, insbesondere bei Verwendung des Verfahrens bzw. Verwendung des damit hergestellten Speiseeises als Tierfutter, enthält weder der Eismix noch die Beschichtungsmasse Zucker oder Zuckeralkohol, noch Süßungsmittel.

Das Portionieren der gefrorenen Eismasse erfolgt bevorzugt in Stücke, die mundgerecht sind, z.B. mit einem Volumen von 0,5mL bis 7mL, bevorzugter bis 5mL oder bis 3mL. Nach dem weiteren Kühlen mittels eines Planetenwalzenextruders erfolgt das Portionieren z.B. durch Schneiden des Extrudats in Stücke vorbestimmter Länge.

Das Beschichten der Stücke aus gefrorener Eismasse ist bevorzugt, um ein Anhaften der Stücke aneinander zu verringern. Optional können die beschichteten Stücke aus gefrorener Eismasse lose in Beutel oder Kartons verpackt werden und sind bei Lagerung unterhalb von -5°C, bevorzugt unterhalb -10°C, einfach voneinander trennbar und einzeln zu entnehmen bzw. haften nicht aneinander.

Das Beschichten kann z.B. durch Besprühen der Stücke aus gefrorener Eismasse mit der Beschichtungsmasse erfolgen oder durch Fördern der Stücke durch ein Bad aus der Beschichtungsmasse und/oder Fördern der Stücke durch einen Vorhang aus herabströmender Beschichtungsmasse.

Im Anschluß an das Beschichten werden die beschichteten Stücke gekühlt, bevorzugt vereinzelt bzw. ohne Kontakt miteinander auf einem Träger angeordnet, z.B. auf eine Temperatur im Bereich von -18°C bis -40 °C.

Der Eismix und die optionale Beschichtungsmasse sind frei von Stabilisator, insbesondere frei von Stabilisator aus der Gruppe, die Guarkernmehl, Johannisbrotkernmehl, Xanthan und Carboxymethylcellulose oder Mischungen von zumindest zweien dieser umfasst.

Der Eismix bzw. das daraus durch Kühlen hergestellte Speiseeis und optional die Beschichtungsmasse weisen eine hochdruckhomogenisierte Emulsion auf, die zumindest ein wasserlösliches Protein, Wasser, zumindest ein Fett und einen Emulgator, optional Farbstoff, enthält oder daraus besteht, und in Mischung mit der Emulsion eine Mischung, die zumindest ein feinteiliges Lebensmittel in Wasser feinverteilt, optional Maltodextrin und/oder Farbstoff, enthält oder daraus besteht,
optional von einer Beschichtungsmasse beschichtet,
oder bestehen daraus.

Im Eismix ist das wasserlösliche Protein z.B. zu 5 bis 20 Gew.-%, bevorzugt 7 bis 10 Gew.-% enthalten,
das Fett z.B. zu 5 bis 15 Gew.-%, bevorzugt 6 bis 12 Gew.-%,
der Emulgator, insbesondere Mono- und Diglyceride von Speisefettsäuren, z.B. zu 0,2 bis 0,8 Gew.-%, bevorzugt 0,4 bis 0,6 Gew.-%,
das feinteilige Lebensmittel z.B. zu 1 bis 30 Gew.-%, bevorzugt 2 bis 20 Gew.-%,
das Maltodextrin ist z.B. zu 5 bis 15 Gew.-%, bevorzugt zu 10 bis 12 Gew.-% enthalten, Rest Wasser,
jeweils bezogen auf den Eismix, oder der Eismix besteht daraus.

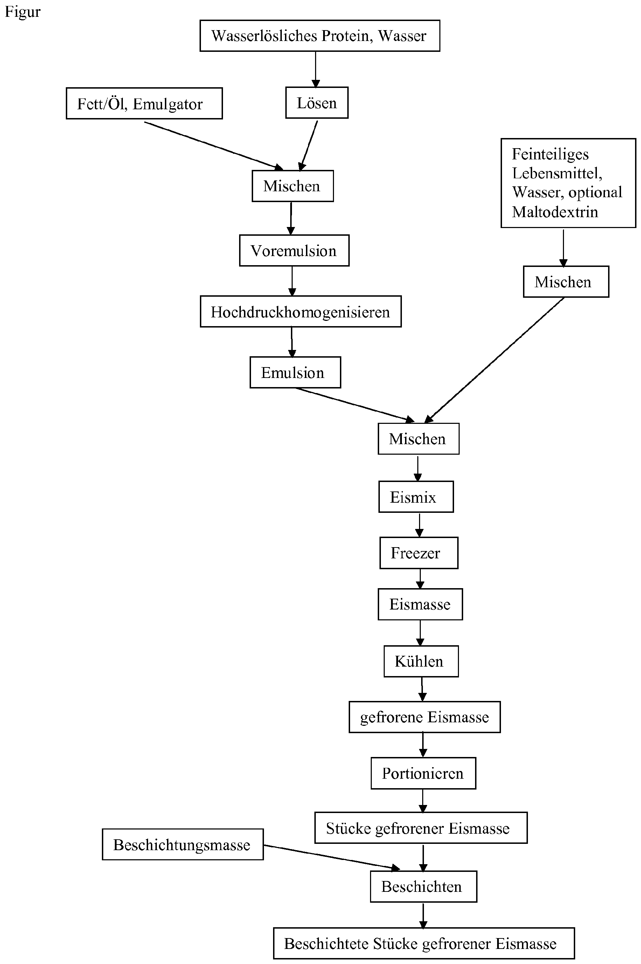

Die Erfindung wird nun genauer anhand von Beispielen beschrieben, die sich auf Speiseeis beziehen, das als Tierfutter, insbesondere als Katzenfutter Verwendung findet, und mit Bezug auf die Figur, die
- schematisch das Verfahren zeigt.

Die Figur zeigt, dass bevorzugt das wasserlösliche Protein in Wasser gelöst wird, bevor es mit dem Fett bei einer Temperatur oberhalb dessen Schmelzpunkt und Emulgator gemischt wird, um die Voremulsion zu erzeugen. Die Voremulsion wird durch das Hochdruckhomogenisieren zu der Emulsion umgesetzt, die anschließend mit dem feinteiligen Lebensmittel und optional Maltodextrin gemischt wird, um den Eismix herzustellen. Dabei ist gezeigt, wie generell bevorzugt, dass das feinteilige Lebensmittel zunächst mit Wasser gemischt wird, um eine wässrige Mischung herzustellen. Diese wässrige Mischung kann eine Suspension, kolloidale Mischung oder eine Lösung des feinteiligen Lebensmittels, ggf. auch des Maltodextrins, in Wasser sein. Durch das Hochdruckhomogenisieren ist die Emulsion zumindest zum Teil pasteurisiert. Daher ist bevorzugt, die erhaltene Emulsion nicht einer keimreduzierenden Behandlung zu unterziehen und optional der Emulsion kein Konservierungsmittel zuzusetzen. Bevorzugt wird das feinteilige Lebensmittel, Wasser und ggf. Maltodextrin pasteurisiert, bzw. dass diese Inhaltsstoffe keimarm, bevorzugt pasteurisiert sind und mit der Emulsion gemischt werden. Der Eismix kann optional pasteurisiert werden.

Der Eismix wird im Freezer unter Bewegung zu einer pumpfähigen Eismasse gefroren und mit Aufschlag versehen. Bevorzugt wird die Eismasse unmittelbar anschließend an den Freezer mittels eines gekühlten Planetenwalzenextruders weiter zu einer gefrorenen Eismasse gekühlt und anschließend in Stücke portioniert. Die so hergestellten Stücke aus gefrorener Eismasse werden bevorzugt mit Beschichtungsmasse überzogen, um beschichtete Stücke herzustellen. Bevorzugt ist die Beschichtungsmasse eine wässrige Zusammensetzung, die z.B. dem Eismix, der Emulsion, oder einer wässrigen Mischung des feinteiligen Lebensmittels in Wasser, optional mit Maltodextrin, entspricht, wobei das wasserlösliche Protein und/oder das feinteilige Lebensmittel dasselbe sein kann, wie im Eismix selbst oder ein anderes Protein und/oder ein anderes feinteiliges Lebensmittel.

### Beispiel 1: Herstellung von Eis mit Lachsgeschmack zur Verwendung als Tierfutter

Für zuckerfreies Speiseeis, das als Tierfutter für Katzen Verwendung fand, wurden 6,4 kg (8 Gew.-%) lactosereduziertes Magermilchpulver als wasserlösliches Protein in Wasser gelöst. Eine Mischung aus 8,4 kg (10,5 Gew.-%) Lachsöl mit 0,4 kg (0,5 Gew.-%) als Fett und Mono- und Diglyceriden von Speisefettsäuren (Cremodan Hi-Whip IN 840, DuPont) als Emulgator und Wasser wurde mittels Propellerrührer bei 500 Upm vermischt und bei 50 bar homogenisiert (APV LAB60), um eine Voremulsion herzustellen Diese Voremulsion wurde über 2500 bis 3000 bar in einer Stufe durch eine Düse entspannt (Standstead Fluid Power, England) und dadurch zu einer Emulsion hochdruckhomogenisiert. Zu der Emulsion wurde eine Mischung aus 2,24 kg (2,8 Gew.-%) Lachspulver (92 % Protein) als feinteiliges Lebensmittel und 2,24 kg (2,8 Gew.-%) Maltodextrin (IN 1146 C* Dry MD01958, erhältlich von Cargill) in Wasser gegeben und eingemischt, um einen Eismix herzustellen. Der Gesamtgehalt an Wasser im Eismix betrug 54,4 kg (68 Gew.-%).

Der Eismix wurde in einem Freezer mit schabendem Rührwerk zu Eismasse von ca. -4°C gekühlt und unmittelbar anschließend in einem Planetenwalzenextruder mit gekühltem Rotor und gekühltem Mantel zu gefrorener Eismasse weiter gekühlt und nach Austritt in zylindrische Stücke von ca. 1 cm Durchmesser und 1,5 cm Länge geschnitten. Die Stücke wurden mit der Mischung des Lachspulvers mit Maltodextrin in Wasser, der ein Farbstoff auf Basis von Roter Beete zugesetzt war, als Beschichtungsmasse überzogen. Dazu wurden die Stücke auf einem Gitterband durch einen Vorhang aus der Beschichtungsmasse gefördert. Anschließend wurden die beschichteten Stücke aus gefrorener Eismasse vereinzelt auf einem Förderband auf -20°C gekühlt und in Beutel gefüllt.

Die beschichteten Stücke konnten nach einer Lagerung bei -18°C einzeln aus dem Beutel entnommen werden und wiesen innerhalb der hartgefrorenen Beschichtung einen Kern aus Eismasse mit Aufschlag auf.

### Beispiel 2: Herstellung von Eis mit Käsegeschmack zur Verwendung als Tierfutter

Zuckerfreies Speiseeis, das als Tierfutter für Katzen Verwendung fand, wurde entsprechend Beispiel 1 mit 5,25 kg (10,5 Gew.-%) Sonnenblumenöl als Fett und 0,25 kg (0,5 Gew.-%) Mono- und Diglyceriden von Speisefettsäuren (Cremodan Hi-Whip) als Emulgator mit 4 kg (8 Gew.-%) lactosereduziertem Magermilchpulver in Wasser voremulgiert, um die Voremulsion herzustellen, die anschließend hochdruckhomogenisiert wurde. Die so hergestellte Emulsion wurde mit einer Mischung aus 4 kg (8 Gew.-%) Maltodextrin und 9 kg (18 Gew.-%) Schmelzkäse als feinteiligem Lebensmittel, die mittels eines Mischers in Wasser (ca. 50°C) feinverteilt war, gemischt, um den Eismix herzustellen. Der Gesamtwassergehalt im Eismix betrug 27,5 kg (55 Gew.-%). Der Eismix wurde entsprechend Beispiel 1 in einem Freezer zu Eismasse gefroren und anschließend in einem Planetenwalzenextruder weiter gekühlt, in Stücke geschnitten und mit Beschichtungsmasse überzogen. Die Beschichtungsmasse konnte die Beschichtungsmasse von Beispiel 1 sein oder die Mischung mit Schmelzkäse mit einem Zusatz von Kurkuma als Farbstoff.

### Beispiel 3: Herstellung von Eis mit Leberwurstgeschmack zur Verwendung als Tierfutter

Zuckerfreies Speiseeis, das als Tierfutter für Katzen Verwendung fand, wurde entsprechend Beispiel 1 mit 3,25 kg (6,5 Gew.-%) Sonnenblumenöl als Fett und 0,25 kg (0,5 Gew.-%) Mono- und Diglyceriden von Speisefettsäuren (Cremodan Hi-Whip) als Emulgator, vorgemischt, mit einer Lösung von 3,25 kg (9,8 Gew.-%) lactosereduziertem Magermilchpulver in Wasser voremulgiert und bei 3500 bar zu einer Emulsion hochdruckhomogenisiert. Die Emulsion wurde mit einer mittels eines Mischers hergestellten Mischung aus feiner Leberwurst und 5,1 kg (10,2 Gew.-%) Maltodextrin (IN 1146C* Dry MD 01958, erhältlich von Cargill) in Wasser zu einem Eismix gemischt. Der Eismix enthielt 27,5 kg (55 Gew.-%) Wasser. Der Eismix wurde entsprechend Beispiel 1 zu gefrorener Eismasse gekühlt und mit der wässrigen Mischung aus Leberwurst und Maltodextrin mit zugesetztem Farbstoff aus gerösteten, fein vermahlenen Cerealien als Beschichtungsmasse überzogen.

### Beispiel 4: Herstellung von Eis mit Lachsgeschmack zur Verwendung als Tierfutter

Beispiel 1 wurde wiederholt, wobei jedoch das Magermilchpulver durch Eiklarpulver oder Gelatine ersetzt wurde. Auch der mit Eiklarpulver oder Gelatine als wasserlöslichem Protein hergestellte Eismix ergab eine annehmbare Eismasse.

Die Beispiele zeigen, dass das Verfahren Speiseeis ohne Zucker und ohne Stabilisator zusätzlich zu dem Emulgator herstellen kann. Der Gesamtgehalt an Zucker geht nur auf das Magermilchpulver bzw. Eiklarpulver oder die Gelatine zurück und liegt unterhalb von 0,5 Gew.-% im Eismix bzw. in der Eismasse.

## Patentansprüche

1. Herstellungsverfahren für Speiseeis, das maximal 1 Gew.-% Zucker enthält, mit den Schritten
- Herstellen einer Voremulsion mit zumindest einem wasserlöslichen Protein und Wasser, zumindest einem Fett und zumindest einem Emulgator, optional einem Farbstoff,
- Hochdruckemulgieren der Voremulsion durch Entspannen einer Druckdifferenz von zumindest 1500 bar zur Herstellung einer Emulsion,
- Mischen der Emulsion mit zumindest einem feinteiligen Lebensmittel, das in einer Maltodextrin enthaltenden Mischung mit Wasser enthalten ist, zur Herstellung eines Eismixes,
- optional Pasteurisieren des Eismixes,
- Kühlen des Eismixes unter Bewegung, zur Herstellung einer Eismasse,
- mit anschließendem weiteren Kühlen der Eismasse mittels eines gekühlten Planetenwalzenextruders zur Herstellung einer gefrorenen Eismasse,
- Portionieren der gefrorenen Eismasse zur Herstellung von Stücken aus der gefrorenen Eismasse.

2. Herstellungsverfahren nach Anspruch 1, **dadurch gekennzeichnet, dass** das Portionieren mittels Schneiden des Extrudats in gefrorene Stücke erfolgt.

3. Herstellungsverfahren nach einem der voranstehenden Ansprüche, **dadurch gekennzeichnet, dass** das feinteilige Lebensmittel vor dem Mischen mit der Emulsion in einer Mischung enthalten ist, die das zumindest eine feinteilige Lebensmittel in Wasser eingemischt und/oder feinverteilt oder gelöst, Maltodextrin und optional einen Farbstoff enthält oder daraus besteht.

4. Herstellungsverfahren nach einem der voranstehenden Ansprüche, **dadurch gekennzeichnet, dass** die Stücke aus der gefrorenen Eismasse mit einer Beschichtungsmasse beschichtet werden, die nur Wasser ist, eine wässrige Mischung zumindest eines feinteiligen Lebensmittels in Wasser, optional mit Maltodextrin, oder die aus Eismix besteht, dem zumindest ein Farbstoff zugesetzt ist, mit anschließendem Kühlen der beschichteten Stücke.

5. Herstellungsverfahren nach einem der voranstehenden Ansprüche, **dadurch gekennzeichnet, dass** die Druckdifferenz 2500 bis 3000 bar beträgt.

6. Herstellungsverfahren nach einem der voranstehenden Ansprüche, **dadurch gekennzeichnet, dass** das Kühlen des Eismixes unter Bewegung zur Herstellung einer Eismasse durch Schaben des Eismixes von einer Kühlfläche erfolgt.

7. Herstellungsverfahren nach einem der voranstehenden Ansprüche, **dadurch gekennzeichnet, dass** das Kühlen des Eismixes unter Bewegung mit Eintragen von Gas erfolgt.

8. Herstellungsverfahren nach einem der voranstehenden Ansprüche, **dadurch gekennzeichnet, dass** das wasserlösliche Protein aus Milchprotein, Gelatine, Eiklar und/oder Pflanzenproteinisolat besteht.

9. Herstellungsverfahren nach einem der voranstehenden Ansprüche, **dadurch gekennzeichnet, dass** der Emulgator aus Mono- und Diglyceriden von Speisefettsäuren und/oder Eigelb besteht.

10. Herstellungsverfahren nach einem der voranstehenden Ansprüche, **dadurch gekennzeichnet, dass** das Speiseeis zusätzlich zu dem Emulgator keinen Stabilisator enthält.

11. Herstellungsverfahren nach einem der voranstehenden Ansprüche, **dadurch gekennzeichnet, dass** dem Speiseeis zusätzlich zu dem Emulgator keine synthetischen Inhaltsstoffe zugesetzt sind.

12. Herstellungsverfahren nach einem der voranstehenden Ansprüche, **dadurch gekennzeichnet, dass** der Eismix bzw. das daraus durch Kühlen hergestellte Speiseeis und die optionale Beschichtungsmasse aus einer hochdruckhomogenisierten Emulsion, die aus zumindest einem wasserlöslichen Protein, Wasser, zumindest einem Fett und einem Emulgator, optional Farbstoff, besteht, und in Mischung mit der Emulsion einer Mischung aus zumindest einem feinteiligen Lebensmittel, das in Wasser feinverteilt ist, optional Maltodextrin und/oder Farbstoff besteht, bestehen.

13. Herstellungsverfahren nach einem der voranstehenden Ansprüche, **dadurch gekennzeichnet, dass** das Speiseeis maximal 1 Gew.-% Zuckeralkohol enthält.

14. Herstellungsverfahren nach einem der voranstehenden Ansprüche, **dadurch gekennzeichnet, dass** der Eismix keinen Alkohol und kein Glycerin enthält.

15. Herstellungsverfahren nach einem der Ansprüche 1 bis 11, **dadurch gekennzeichnet, dass** der Voremulsion und/oder der Mischung des zumindest eines feinteiligen Lebensmittels mit Wasser und/oder dem Eismix zumindest ein Süßungsmittel zugesetzt wird, das ein Peptid-Süßstoff oder Steviaglycosid und/oder Zuckeralkohol ist.

16. Herstellungsverfahren nach einem der voranstehenden Ansprüche, **dadurch gekennzeichnet, dass** das feinteilige Lebensmittel aus der Gruppe ausgewählt ist, die Fischpulver, Fleischpulver, Wurstbrät, Streichwurst, Fleischextrakt, pflanzliches Pulver, Fruchtpulver, oder Fruchtpülpe, Käsepulver, Schmelzkäse oder eine Mischung von zumindest zweien dieser umfasst oder daraus besteht.

17. Herstellungsverfahren nach einem der voranstehenden Ansprüche, **dadurch gekennzeichnet, dass** der Farbstoff aus der Gruppe ausgewählt ist, die aus Kurkuma, Roter Beete und/oder gerösteten, feinvermahlenen Cerealien besteht.

18. Herstellungsverfahren nach einem der voranstehenden Ansprüche, **dadurch gekennzeichnet, dass** im Eismix 5 bis 20 Gew.-% wasserlösliches Protein, 5 bis 15 Gew.-% Fett, 0,2 bis 0,8 Gew.-% Emulgator, der aus Mono- und Diglyceriden von Speisefettsäuren besteht, 1 bis 30 Gew.-% feinteiliges Lebensmittel und 5 bis 15 Gew.-% Maltodextrin enthalten sind.

19. Speiseeis, das maximal 1 Gew.-% Zucker, der Glucose, Saccharose, Fructose, Lactose und Maltose umfasst, maximal 1 Gew.-% Zuckeralkohol, keinen Alkohol und kein Glycerin enthält, **dadurch gekennzeichnet, dass** im Eismix 5 bis 20 Gew.-% wasserlösliches Protein, 5 bis 15 Gew.-% Fett, 0,2 bis 0,8 Gew.-% Emulgator, der aus Mono- und Diglyceriden von Speisefettsäuren besteht, 1 bis 30 Gew.-% feinteiliges Lebensmittel und 5 bis 15 Gew.-% Maltodextrin enthalten sind, erhältlich nach dem Herstellungsverfahren gemäß Anspruch 18.

20. Speiseeis nach Anspruch 19, **dadurch gekennzeichnet, dass** es aus einer gefrorenen Mischung mit Aufschlag aus einer hochdruckhomogenisierten Emulsion besteht, die aus dem wasserlöslichen Protein, Wasser, Fett und Emulgator, optional Farbstoff, besteht, mit einer Mischung besteht, die das feinteilige Lebensmittel in Wasser feinverteilt, Maltodextrin und/oder Farbstoff, enthält oder daraus besteht.

21. Verwendung eines Speiseeises nach Anspruch 19 oder 20 als Futter für Katzen.

## Claims

1. Process for production of ice-cream which contains at maximum 1 wt.-% sugar with the steps of
- producing a pre-emulsion having at least one water-soluble protein and water, at least one fat and at least one emulsifier, optionally a colorant,
- high pressure-emulsifying the pre-emulsion by releasing a pressure difference of at least 1,500 bar for producing an emulsion,
- mixing the emulsion with at least one finely divided foodstuff, which is contained in a mixture with water containing maltodextrin, for producing an ice mix,
- optionally pasteurizing the ice mix,
- cooling the ice mix under motion for producing an ice mass,
- with subsequent further cooling of the ice mass by means of a cooled planetary roller extruder for producing a frozen ice mass,
- portioning the frozen ice mass for producing pieces from the frozen ice mass.

2. Process for production according to claim 1, **characterized in that** the portioning occurs by cutting of the extrudate into frozen pieces.

3. Process for production according to one of the preceding claims, **characterized in that** the finely divided foodstuff prior to mixing with the emulsion is contained in a mixture which contains or consists of the at least one finely divided foodstuff mixed in and/or finely dispersed in or dissolved in water, maltodextrin and optionally a colorant.

4. Process for production according to one of the preceding claims, **characterized in that** the pieces of the frozen ice mass are coated with a coating mass which is only water, an aqueous mixture of at least one finely divided foodstuff in water, optionally with maltodextrin, or which consists of the ice mix, to which at least one colorant is added, with subsequent cooling of the coated pieces.

5. Process for production according to one of the preceding claims, **characterized in that** the pressure difference amounts to 2,500 to 3,000 bar.

6. Process for production according to one of the preceding claims, **characterized in that** cooling the ice mix under motion for producing an ice mass occurs by scraping the ice mix from a cooling surface.

7. Process for production according to one of the preceding claims, **characterized in that** cooling the ice mix under motion occurs with introducing gas.

8. Process for production according to one of the preceding claims, **characterized in that** the water-soluble protein consists of milk protein, gelatin, albumen and/or plant protein isolate.

9. Process for production according to one of the preceding claims, **characterized in that** the emulsifier consists of mono- and diglycerides of edible fatty acids and/or egg yolk.

10. Process for production according to one of the preceding claims, **characterized in that** the ice-cream in addition to the emulsifier does not contain a stabilizer.

11. Process for production according to one of the preceding claims, **characterized in that** in addition to the emulsifier no synthetic ingredients are added to the ice-cream.

12. Process for production according to one of the preceding claims, **characterized in that** the ice mix, respectively the ice-cream produced therefrom by cooling, and the optional coating mass consist of a high pressure-homogenized emulsion, which consists of at least one water-soluble protein, water, at least one fat and an emulsifier, optionally colorant, and in admixture with the emulsion of a mixture consisting of at least one finely divided foodstuff that is finely dispersed in water, optionally maltodextrin and/or colorant.

13. Process for production according to one of the preceding claims, **characterized in that** the ice-cream contains at maximum 1 wt.-% sugar alcohol.

14. Process for production according to one of the preceding claims, **characterized in that** the ice mix contains no alcohol and no glycerol.

15. Process for production according to one of claims 1 to 11, **characterized in that** at least one sweetening agent, which is a peptide-sweetener or stevia glycoside and/or sugar alcohol, is added to the pre-emulsion and/or to the mixture of the at least one finely divided foodstuff with water and/or to the ice mix.

16. Process for production according to one of the preceding claims, **characterized in that** the finely divided foodstuff is selected from the group comprising or consisting of fish powder, meat powder, sausage meat, sausage for spreading, meat extract, plant powder, fruit powder, or fruit pulp, cheese powder, processed cheese or a mixture of at least two of these.

17. Process for production according to one of the preceding claims, **characterized in that** the colorant is selected from the group consisting of curcuma, red beet and/or roasted, finely ground cereals.

18. Process for production according to one of the preceding claims, **characterized in that** 5 to 20 wt.-% water-soluble protein, 5 to 15 wt.-% fat, 0.2 to 0.8 wt.-% emulsifier consisting of mono-and diglycerides of edible fatty acids, 1 to 30 wt.-% finely divided foodstuff and 5 to 15 wt.-% maltodextrin are contained in the ice mix.

19. Ice-cream that contains at maximum 1 wt.-% sugar comprising glucose, saccharose, fructose, lactose and maltose, at maximum 1 wt.-% sugar alcohol, no alcohol and no glycerol, **characterized in that** 5 to 20 wt.-% water-soluble protein, 5 to 15 wt.-% fat, 0.2 to 0.8 wt.-% emulsifier consisting of mono-and diglycerides of edible fatty acids, 1 to 30 wt.-% finely divided foodstuff and 5 to 15 wt.-% maltodextrin are contained in the ice mix, obtainable by the process for production according to claim 18.

20. Ice-cream according to claim 19, **characterized in that** it consists of a frozen mixture having overrun of a high pressure-homogenized emulsion which consists of the water-soluble protein, water, fat and emulsifier, optionally colorant, with a mixture which contains or consists of the finely divided foodstuff finely dispersed in water, maltodextrin and/or colorant.

21. Use of an ice-cream according to claim 19 or 20 as feed for cats.

## Revendications

1. Procédé de production de crème glacée contenant au maximum 1% en poids de sucre, avec les étapes
- Produire une pré-émulsion avec au moins une protéine soluble dans l'eau et de l'eau, au moins une matière grasse et au moins un émulsifiant, facultativement avec un colorant,
- émulsifier sous haute pression la pré-émulsion par la diminution d'une différence de pression d'au moins 1500 bar pour produire une émulsion,
- mélanger l'émulsion avec au moins un aliment à particules fines contenu dans un mélange contenant de la maltodextrine avec de l'eau pour produire un mix de crème glacée,
- facultativement, pasteuriser le mix de crème glacée,
- refroidir le mix de crème glacée sous agitation pour produire une masse de crème glacée,
- avec un refroidissement additionnel ultérieur de la masse de crème glacée au moyen d'une extrudeuse à vis planétaire pour produire une masse de crème glacée surgelée,
- diviser la masse de crème glacée surgelée en portions pour produire des morceaux de la masse de crème glacée surgelée.

2. Le procédé de production selon la revendication 1, **caractérisé en ce que** la division en portions se produit par le découpage de l'extrudat en morceaux surgelés.

3. Le procédé de production selon l'une des revendications précédentes, **caractérisé en ce que**, avant d'être mélangé avec l'émulsion, l'aliment à particules fines est contenu dans un mélange contenant ou consistant en l'au moins un aliment à particules fines, mélangé et/ou finement dispersé et/ou dissous dans de l'eau, maltodextrine et facultativement un colorant.

4. Le procédé de production selon l'une des revendications précédentes, **caractérisé en ce que** les morceaux de la masse de crème glacée surgelée sont enrobés d'une masse d'enrobage, qui n'est que de l'eau, un mélange aqueux au moins d'un aliment à particules fines dans de l'eau, facultativement avec de la maltodextrine, ou qui consiste en un mix de crème glacée auquel au moins un colorant est ajouté, avec un

5. Le procédé de production selon l'une des revendications précédentes, **caractérisé en ce que** la différence de pression est 2500 à 3000 bar.

6. Le procédé de production selon l'une des revendications précédentes, **caractérisé en ce que** le refroidissement du mix de crème glacée se produit sous agitation pour produire une masse de crème glacée par le raclage du mix de crème glacée d'une surface de refroidissement.

7. Le procédé de production selon l'une des revendications précédentes, **caractérisé en ce que** le refroidissement du mix de crème glacée se produit sous agitation avec l'incorporation de gaz.

8. Le procédé de production selon l'une des revendications précédentes, **caractérisé en ce que** la protéine soluble dans l'eau consiste en protéine laitière, gélatine, albumen et/ou isolat de protéines végétales.

9. Le procédé de production selon l'une des revendications précédentes, **caractérisé en ce que** l'émulsifiant consiste en mono et diglycérides d'acides gras et/ou jaune d'œuf.

10. Le procédé de production selon l'une des revendications précédentes, **caractérisé en ce que** la crème glacée ne contient pas de stabilisant en outre de l'émulsifiant.

11. Le procédé de production selon l'une des revendications précédentes, **caractérisé en ce qu'**aucun ingrédient synthétique n'est ajouté à l'émulsifiant.

12. Le procédé de production selon l'une des revendications précédentes, **caractérisé en ce que** le mix de crème glacée ou bien la crème glacée produite à partir du même par refroidissement et la masse d'enrobage facultative consistent en une émulsion homogénéisée sous haute pression consistant en au moins une protéine soluble dans l'eau, eau, au moins une matière grasse et un émulsifiant, facultativement un colorant, et, en mélange avec l'émulsion, un mélange consistant en au moins un aliment à particules fines dispersé finement dans de l'eau, facultativement maltodextrine et/ou colorant.

13. Le procédé de production selon l'une des revendications précédentes, **caractérisé en ce que** la crème glacée contient au maximum 1 % d'alcool de sucre.

14. Le procédé de production selon l'une des revendications précédentes, **caractérisé en ce que** le mix de crème glacée ne contient pas d'alcool ni de glycérine.

15. Le procédé de production selon l'une des revendications 1 à 11, **caractérisé en ce qu'**au moins un agent édulcorant est ajouté à la pré-émulsion et/ou au mélange du au moins un aliment à particules fines avec de l'eau et/ou au mix de crème glacée, l'agent édulcorant étant un édulcorant de type peptide ou du glycoside de stéviol et/ou de l'alcool de sucre.

16. Le procédé de production selon l'une des revendications précédentes, **caractérisé en ce que** l'aliment à particules fines est sélectionné dans le groupe comprenant ou consistant en poudre de poisson, poudre de viande, chair à saucisse, saucisse à tartiner, extrait de viande, poudre végétal, poudre de fruits, ou pulpes de fruit, poudre de fromage, fromage à tartiner ou un mélange d'au moins deux de ceux-ci.

17. Le procédé de production selon l'une des revendications précédentes, **caractérisé en ce que** le colorant est sélectionné dans le groupe consistant en curcuma, betterave et/ou céréales torréfiées et finement moulues.

18. Le procédé de production selon l'une des revendications précédentes, **caractérisé en ce que** le mix de crème glacée contient 5 à 20 % en poids de protéine soluble dans l'eau, 5 à 15 % en poids de matière grasse, 0,2 à 0,8 % d'émulsifiant composé de mono et diglycérides d'acides gras, 1 à 30 % en poids d'aliment à particules fines et 5 à 15 % en poids de maltodextrine.

19. Crème glacée, comprenant au maximum 1 % en poids de sucre, de glucose, de saccharose, de fructose, de lactose et de maltose, au maximum 1 % en poids d'alcool de sucre, ne contenant pas d'alcool ni de glycérine, **caractérisée en ce que** le mix de crème glacée contient 5 à 20 % en poids de protéine soluble dans l'eau, 5 à 15 % en poids de matière grasse, 0,2 à 0,8 % en poids d'émulsifiant composé de mono et diglycérides d'acides gras, 1 à 30 % en poids d'aliment à particules fines et 5 à 15 % en poids de maltodextrine, obtenable selon le procédé de production selon la revendication 18.

20. La crème glacée selon la revendication 19, **caractérisée en ce qu'**elle contient ou consiste en un mélange surgelé avec un supplément d'une émulsion homogénéisée sous haute pression consistant en la protéine soluble dans l'eau, eau, matière grasse et émulsifiant, facultativement colorant, et un mélange contenant ou consistant en l'aliment à particules fines dispersé finement dans de l'eau, maltodextrine et/ou colorant.

21. Utilisation d'une crème glacée selon la revendication 19 ou 20 comme nourriture pour les chats.
